# EUROPEAN PATENT APPLICATION

(11) **EP 4 134 648 A1**
(43) Date of publication of application: **15.02.2023**
(21) Application number: 20930424.5
(22) Date of filing: 03.12.2020
(51) Int. Cl.: G01L 7/04

(54) **ELECTRIC CONTACT MANOMETER IN AN EXPLOSION-PROOF CASING**

(30) Priority: 10.04.2020 RU 2020113293
(71) Applicant: Limited Liability Company Scientific and Production Company "Jumas", Moscow, 121552 (RU)
(72) Inventor: MULEV, Yuri Vladimirovich, Moscow, 121552 (RU); MULEVA, Sofia Yurievna, 14055 Berlin (DE); MULEV, Mikhail Yurievich, Minsk, 220012 (BY); MULEV, Alexey Yurievich, Tatarki, 143063 (RU)
(74) Representative: Benatov, Samuil Gabriel
(86) International application number: PCT/RU2020/050365
(87) International publication number: WO 2021/206585

(57) **Abstract**

The invention relates to the field of measuring equipment and is aimed at increasing the operational reliability of the pressure gauge in explosive conditions while maintaining ease of use. Explosion-proof electric-contact pressure gauge, comprises a housing and a shell, a jacket of electrical lead-in, a composite holder with a Bourdon tube (sensor), and an outlet tube. The composite holder consists of a lower part and an upper part, mounted inside the housing with the outlet tube, and the lower part of the holder is mounted on the outlet tube outside the housing and is sealed to the outlet tube at its external outlet, wherein in the housing under the outlet tube there is a hole with diameter, corresponding to the diameter of the outlet tube. The Bourdon tube (sensor) is connected to the outlet tube through the upper part of the holder.

## Description

The invention relates to the field of measuring equipment and is intended to control the pressure of gaseous and liquid substances in industrial and other processes in explosive environments.

The known electric-contact pressure gauge in an explosion-proof casing from the prior art, designed to control the pressure of liquid and gaseous media, comprises a housing with a sensor in the form of tubular spring with transmission mechanism and a holder for the tubular spring (Mulev Yu.V. Pressure gauges. Mechanical devices for measuring and controlling pressure, M.: Special book, 2017, p. 273, 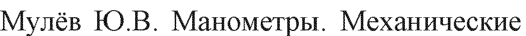 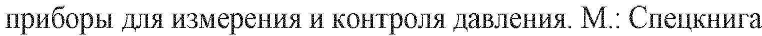 , 2017, c. 273).

The disadvantage of the known device is manifested in the high massiveness of the explosion-proof casing, the inconvenience of the practical operation of this device.

Known electric-contact pressure gauge in an explosion-proof casing, in which the holder with the sensor is mounted through a hole in the wall of the housing (Mulev Yu.V. Pressure gauges. Mechanical devices for measuring and controlling pressure. M.: Special book, 2017, p. 277, 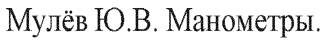 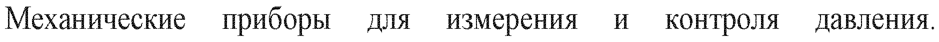 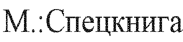 , 2017, c. 277), is known.

The disadvantage is manifested in the difficulty of ensuring the tightness of the upper holder and the housing.

A pressure gauge is known, comprising a housing with a stiffening ring and a holder made of two parts: internal and external, wherein the internal part goes into the housing (it is mounted inside the housing), and the external part is installed on the internal part that extends outside the housing. The housing is reinforced from the inside with stiffeners. The internal part has an abutting pad and rests on the stiffeners. At the mounting location of the external part of the holder, an outlet is provided, reinforced by the thickness of the housing and (or) additional stiffeners. The stiffening ring has an additional connection with the housing through stops (KR 20-2008-0003028, 01.08.2008).

The structure of the pressure gauge described above assumes the presence of a sufficiently large hole under the internal part of the holder, which then needs to be sealed along the perimeter (or circumference), wherein due to the large circumference along which the sealing is necessary, there is a high risk that in case of an explosion a destruction of the pressure gauge will occur, hence, this pressure gauge has low reliability when operating in explosive conditions. In addition, such a structure of the holder, the type "one inside the other", fixes one identical section of the tube (the section of the tube, which is continuation of the sensor), wherein the section of the bend of the tube in the housing remains unprotected.

The closest analogue of the patented solution is an explosion-proof electric-contact pressure gauge, comprising a housing and a shell, a jacket of electrical lead-in, and a composite holder with a sensor. Fastening of the jacket of the electrical lead-in to the housing is carried out with bolts. The bolts are mounted inside the housing. The glass in the shell is mounted by one-piece connection. In the structure, the glass of the device rests on the housing. In order to reduce the cost of the device and to improve the manufacturability of the assembly, the pressure gauge holder is made of two parts: a head, to which the tubular spring and transmission mechanism are attached, which is made of non-ferrous metal, traditionally used for these purposes, and a body of the pressure gauge holder, where less valuable metal or other material with appropriate mechanical properties can be used. The head is fixed to the body of the holder by a threaded connection (RU 163269, 10.07.2016).

In the proposed structure, the pressure gauge holder can be made from rolled metal products of smaller range. For example, for a holder with an outlet thread M20x1.5, 14x14 rolled metal products are used. The outlet thread of required size of the pressure gauge is provided by a threaded bushing with custom dimensions. A bushing with double-sided thread, internal and external, is mounted on the holder, its connecting piece.

The disadvantage of the structure is the lack of reliability when working in explosive conditions due to the difficulty of sealing the holder to the housing.

The technical problem to be solved by the proposed invention is to increase the explosion protection and reliability (expansion of the range) of the structures of devices for controlling the pressure of gaseous and liquid substances in industrial and other processes in explosive environmental conditions, which would eliminate the above disadvantages.

The technical result achieved by the implementation of the applied invention is to increase the reliability of the operation of the pressure gauge in explosive conditions by ensuring the tightness of the connection of the upper and lower holders and the explosion-proof connection of the holders with the housing without greatly complicating the structure while maintaining ease of use.

Said technical result is achieved in an explosion-proof electric-contact pressure gauge, comprising a housing and a shell, a jacket of electrical lead-in, a composite holder with a Bourdon tube (sensor).

The composite holder consists of a lower part and an upper part, which is installed inside the housing with outlet tube, and the lower part of the holder is mounted on the outlet tube outside the housing and is sealed to the outlet tube at its outer outlet, wherein a hole with diameter corresponding to the diameter of the outlet tube is made in the housing under the outlet tube.

The Bourdon tube (sensor) is connected to the outlet tube through the upper holder.

A through channel is made in the upper holder, one outlet of which is joined to one side of the Bourdon tube, and the second outlet is joined to the outlet tube, wherein the joint of the Bourdon tube and outlet tube to the upper holder is reliably welded.

Due to the fact that the holder is two-pieced and it is not mounted in the hole of the housing, the hole of the housing is small, respectively, the gap that is sealed is also small, and, therefore, the degree of explosion protection of the housing is higher (it will be more difficult to destroy the pressure gauge in an explosion). As a result, the use of outlet tube that provides connection of the measuring element - Bourdon tube with the inlet of the measured medium using the upper holder, as well as ensuring tightness of the passage through the housing and through the lower holder, significantly increases the explosion protection of the structure.

Thus, the claimed pressure gauge has higher production reliability in explosive conditions.

In addition, the high production reliability of the claimed pressure gauge in explosive conditions is also achieved by connecting the Bourdon tube and the outlet tube through the upper part of the holder. As a rule, in the known pressure gauges, the joint of the Bourdon tube and the outlet tube is angular and is the most mechanically weak (breakable) area, therefore, it is destructed in event of an explosion. In the present solution, the replacement of the angular section of the connection between the Bourdon tube and the outlet tube with the upper holder with an internal angular channel for connecting to the outlets of the channel of the Bourdon tube and the outlet tube significantly increases the strength of the angular section, which is the passage between the Bourdon tube and the outlet tube, which leads to an increase in the reliability of the pressure gauge in explosive conditions (that is, the angular section of the passage between the Bourdon tube and the outlet tube is monolithic in the massive casted upper holder, which increases the strength of this section and, as a result, the reliability of the pressure gauge).

Additionally, the outlet tube at the exit of the lower part of the composite holder is mounted protruding, and the housing is reinforced from the inside with stiffeners, wherein the upper part of the composite holder is installed inside the housing with abutting pad and is supported by stiffeners, and, an outlet is provided at the mounting site of the lower part of the composite holder in order to ensure mechanical strength of the connection of the lower part of the holder to the thin-walled housing, said outlet is reinforced by the thickness of the housing and/or additional stiffeners, and the lower part of the holder is attached to it. Thus, the explosion protection of the pressure gauge is increased by improving the joint of the housing with the holder, as well as its mechanical strength and performance characteristics. With the housing walls being of minimal thickness, the mechanical strength is provided by stiffeners installed both on the housing's butt end flat surfaces, its walls, and on the transition between its walls and butt end, wherein the housing acts as an explosion-proof casing and, with this structure, it has sufficient mechanical strength, and also allows minimizing metal consumption with a minimum wall thickness and sufficient housing thickness. The presence in the butt end part of the housing of abutting pad in a certain position ensures fixation (positioning) of the upper part of the holder avoiding any possible movement, and execution of the abutting pad in the form of stiffeners connecting the walls and butt end of the housing simplifies the structure of the pressure gauge.

In addition, the housing and shell are connected by M96...110 thread with a pitch of 1.0...2.5 and have stiffening rings having an additional connection with the housing and shell through stops, wherein the contacting rings of the housing and shell have interpenetrating surfaces. By mounting the housing and shell through threaded connection with the parameters M96...110 with a pitch of 1.0...2.5, the problem of connecting the housing and shell with a gap not exceeding the standard (defined) values is solved. Flange-flange connections are very metal intensive. Thus, the metal consumption of the structure is reduced and the explosion protection of the casing is increased. By manufacturing (mounting) on the pressure gauge's housing and shell of stiffening rings, the rigidity of the large-diameter threaded connection with a thin-walled structure is ensured (the rigidity of the thin-walled structure is ensured). The rings can be arranged either separately on the surface or in contact, which can increase the explosion protection of the structure. In order to increase the area of contact between the stiffening rings of the housing and shell, they are interconnected, i.e. the convexity of one ring is compensated by depression of the other. Thus, the length of the slot gap increases, which increases the explosion protection of the structure. Additional rigidity of the structure and mechanical strength with an insignificant increase in metal consumption will be provided by connecting the stiffening rings with the housing and shell through stops.

Additionally, the connection of the housing and jacket of electrical lead-in is carried out using a labyrinth passage, which increases the length of the slot and increases the controllability of the slot gap. Thus, there is an improvement (an increase in the length and guarantee of gaps (tolerances) of the explosion-proof slot). Making the flat surfaces (walls) of the labyrinth passage inclined increases the manufacturability of the production of this pressure gauge and improves ease of use. However, when manufacturing the labyrinth passage with inclined flat surfaces (walls), a gap may appear in the butt end flat surfaces of this seal, which is compensated by sealing the butt ends of the labyrinth passage with the help of additional thin-walled gaskets.

The jacket of the electrical lead-in can be made with a flange having metal removals to reduce its metal consumption (to lighten it), wherein the overall walls and places of threaded fastening remain reinforced.

The shell is assembled with the glass by non-detachable connection. The non-detachable connection of the glass with the shell increases the explosion protection of the pressure gauge structure. The glass in the housing has a recess for fitting into the shell, due to which an increase in the length of the glass-shell connection is achieved. In the structure, the pressure gauge glass rests on the housing, which greatly simplifies the structure of the pressure gauge. The glass may have a recess for fitting into the housing, which increases the length of the explosion-proof slot of the shell-to-housing connection by inlet of the glass into the housing.

Traditionally, pressure gauge housings have a cylindrical shape of same diameter. But in the butt end part of the housing, where the sensor is located, housing of such diameter is not relevant. Therefore, in order to reduce metal consumption and optimize the structure, the diameter of the housing of an explosion-proof pressure gauge at the installation site of the sensor is reduced, that is, in the placing site of the Bourdon tube, the housing narrows to a smaller diameter.

Additionally, the jacket of the electrical lead-in is fastened to the housing by bolts, which makes it possible to quickly dismantle the structure in industrial conditions and, as a result, increases the ease of maintenance of the pressure gauge. The bolts are mounted from the inside of the housing and have a countersunk head. Technologically, the structure is simplified when standard bolts can be used, they are mounted from the inside of the housing. The use of bolts with countersunk head inside the housing increases the working space. The bolts are mounted through threads in the housing, in which case the mounting is more practical. However, in order to maintain the mechanical strength of the bolted connection with a thin-walled housing structure, the bolts can be mounted on reinforced platforms.

A standard electrical connector can be installed in the pressure gauge under the jacket, which reduces the complexity of the installation of electrical lines in screw/bolted connections in industrial conditions and ensures ease of use.

Fixing a plate with information about the device on the housing of the device is a rather laborious operation. Much more technologically advanced is the placement of information about the device in the form of a plate printed on the side surface of the housing. Putting the information on the walls of the housing is carried out by laser printing.

Thus, thanks to the claimed structure of the invention, the technical result is achieved, including an increase in the performance of the pressure gauge and safety of use without greatly complicating its structure and technological manufacture along with an increase in strength characteristics.

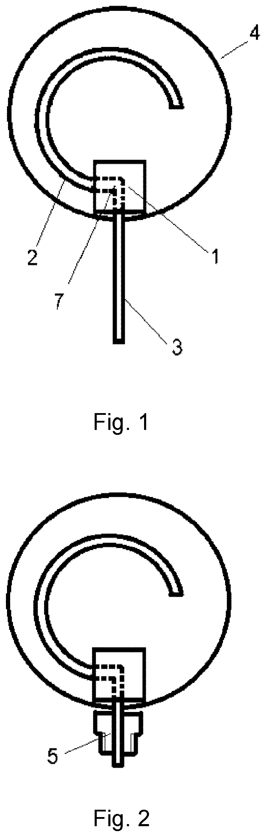

The summary of the invention is illustrated by drawings, where Fig. 1 shows pressure gauge with Bourdon tube and outlet tube connected by means of the upper part of the holder with an internal angled channel; fig. 2 shows pressure gauge with upper and lower parts of the holder installed; fig. 3 shows pressure gauge with assembled holder.

The explosion-proof electric-contact pressure gauge comprises a housing 4 (explosion-proof casing reinforced from the inside with stiffeners and made cylindrical) and a shell with integral glass, a jacket of electrical lead-in, a composite holder with a Bourdon tube 2, passing into an outlet tube 3, having a protrusion. The housing 4 and shell are connected by thread M96...110 with a pitch of 1.0...2.5 and have stiffening rings, at the point of contact between the rings of the housing 4 and the shell interpenetrating surfaces are formed. The stiffening rings have an additional connection with the housing 4 and the shell through stops. In the section where the Bourdon tube 2 is arranged, the housing 4 is narrowed to a smaller diameter. In the housing 4 under the outlet tube 3, a hole with a diameter corresponding to the diameter of the Bourdon tube 2 is made.

Connection of the housing 4 and jacket of the electrical lead-in is carried out using a labyrinth passage, the flat surfaces of which are made inclined, wherein the butt ends of the labyrinth passage are sealed with additional thin-walled gaskets, and the jacket of the electrical lead-in is made with a flange having metal removals.

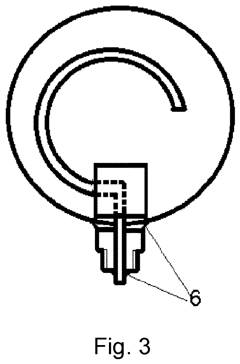

The composite holder consists of a lower part 5 and an upper part 1, which is installed inside the housing with the outlet tube 3, and the lower part 5 of the holder is mounted on the outlet tube 3 outside the housing and is sealed to the outlet tube 3 at its outer outlet. Fig. 3 shows the places of welding 6. The Bourdon tube is connected to the outlet tube by the upper part of the holder 1 with an internal through channel 7. The joints of the Bourdon tube 2 and the outlet tube 3 with the corresponding outlets of the inner channel of the upper part 1 of the holder are securely welded.

The upper part 1 of the composite holder is installed inside the housing 4 with abutting pad and rests on the stiffeners, and at the place of installation of the lower part 5 of the composite holder an outlet is provided, reinforced by the thickness of the housing and/or additional stiffeners.

Pressure is measured using a sensor - Bourdon tube, which can have an elliptical or oval cross section, it is bent in an arc and is welded at one end. The principle of operation of the pressure gauge is based on balancing the measured pressure by the forces of elastic deformation of the Bourdon tube.

Measured pressure is supplied to the internal cavity of the Bourdon tube, one end of which is sealed (free), and the other end is connected to one outlet of the internal channel of the upper holder.

Pressure acts on the inner surfaces of the Bourdon tube. Due to the difference in areas affected by the pressure of the medium, the Bourdon tube tends to straighten, that is, with an increase in pressure, the Bourdon tube unbends, and, with a decrease, it bends.

This leads to movement of the free end of the tube, which is connected through a rod to a gear sector (not shown) acting on a gear wheel with pointer. The pointer position is interpreted by means of a scale printed on the pressure gauge into overpressure reading.

## Claims

1. Explosion-proof electric-contact pressure gauge, comprising a housing and a shell, a jacket of electrical lead-in, a composite holder with a Bourdon tube connected to the outlet tube, **characterized in that** the composite holder consists of a lower part and an upper part, which is installed inside the housing, and the lower part of the holder is mounted on the outlet tube outside the housing and sealed with the outlet tube at outer outlet of the housing, wherein the Bourdon tube is connected to the outlet tube through the upper part of the holder, and in the housing under the outlet tube a hole with corresponding diameter is made.

2. Explosion-proof electric-contact pressure gauge according to claim 1, **characterized in that** the outlet tube at the exit of the lower part of the composite holder has a protrusion.

3. Explosion-proof electric-contact pressure gauge according to claim 1, **characterized in that** the housing is reinforced from the inside with stiffeners.

4. Explosion-proof electric-contact pressure gauge according to claim 1, **characterized in that** the upper part of the composite holder is installed inside the housing with abutting pad and rests on stiffeners, and at the place of installation of the lower part of the composite holder, an outlet is provided, reinforced by the thickness of the housing and/or additional stiffeners.

5. Explosion-proof electric-contact pressure gauge according to claim 1, **characterized in that** the housing and shell are connected by M96...110 threads with a pitch of 1.0...2.5 and have stiffening rings.

6. Explosion-proof electric-contact pressure gauge according to claim 5, **characterized in that** contacting rings of the housing and shell have interpenetrating surfaces.

7. Explosion-proof electric-contact pressure gauge according to claim 5, **characterized in that** the stiffening rings have an additional connection with the housing and shell through stops.

8. Explosion-proof electric-contact pressure gauge according to claim 1, **characterized in that** the connection of the housing and jacket of electrical lead-in is carried out using labyrinth passage.

9. Explosion-proof electric-contact pressure gauge according to claim 8, **characterized in that** the flat surfaces of the labyrinth passage are made inclined.

10. Explosion-proof pressure gauge according to claim 9, **characterized in that** the butt ends of the labyrinth passage are sealed with additional thin-walled gaskets.

11. Explosion-proof electric-contact pressure gauge according to claim 1, **characterized in that** the jacket of electrical lead-in is made with flange having metal removals.

12. Explosion-proof electric-contact pressure gauge according to claim 1, **characterized in that** the shell is assembled with the glass by non-detachable connection.

13. Explosion-proof electric-contact pressure gauge according to claim 1, **characterized in that** the housing is made cylindrical and at the area of location of the Bourdon tube narrows to a smaller diameter.

14. Explosion-proof electric-contact pressure gauge according to claim 1, **characterized in that** the glass has a recess for fitting into the shell.

15. Explosion-proof electric-contact pressure gauge according to claim 1, **characterized in that** the glass has a groove for entering inside the housing.

16. Explosion-proof electric-contact pressure gauge according to claim 1, **characterized in that** the upper holder has a through channel, one outlet of which is joined to one side of the Bourdon tube, and the second outlet is joined to the outlet tube.
